# EUROPEAN PATENT APPLICATION

(11) **EP 2 589 757 A2**
(43) Date of publication of application: **08.05.2013**
(21) Application number: 12190515.2
(22) Date of filing: 30.10.2012
(51) Int. Cl.: F01D 11/00

(54) **Gasket, e.g. a metal gasket, for a gas turbine engine**

(30) Priority: 04.11.2011 US 201113289101
(71) Applicant: United Technologies Corporation, Hartford, CT 06101 (US)
(72) Inventor: LUTJEN, Paul M., Kennebunkport, ME Maine 06046 (US); STEVENS, Michael S., Alfred, ME Maine 04002 (US)
(74) Representative: Leckey, David Herbert

(57) **Abstract**

A gasket assembly (50) for a gas turbine engine includes a seal portion (52) defining outer surfaces (62) for providing sealing contact and a bias portion (54) defining inner structures that are spaced apart from the seal portion (52) for biasing the outer surfaces (62) into sealing contact. The gasket further includes end portions (56) disposed at ends of the seal portion (52) that including a material thickness greater than a thickness of the bias portion (54).

## Description

### BACKGROUND

This disclosure generally relates to a gasket seal, and more particularly to a gasket air seal for sealing gaps between multiple relative moving parts.

A turbine engine includes multiple gaskets of varying sizes and shapes to control leakage and gas flow. Many of the gaskets seal gaps are defined between multiple independently moving parts. Accordingly, any gasket is required to seal against undesired leakage, but also accommodate relative movement between parts. Moreover, each gasket must provide a level of durability capable of withstanding wear encountered as a result of relative movement.

### SUMMARY

A disclosed example gasket assembly for a gas turbine engine according to a first aspect of the present invention includes a seal portion defining outer surfaces for providing sealing contact and a bias portion defining inner structures that are spaced apart from the seal portion for biasing the outer surfaces into sealing contact. The gasket further includes end portions disposed at ends of the seal portion that include a material thickness greater than a thickness of the bias portion.

In an embodiment of the gasket assembly, the gasket assembly comprises a single continuous structure and the end portions define distal ends of the continuous structure.

In an embodiment of any of the foregoing gasket assemblies, the bias portion includes inner legs spaced apart inward of the outer surfaces.

In a further embodiment of any of the foregoing gasket assemblies, the end portions include a thickness greater than a thickness of the outer legs.

In a further embodiment of any of the foregoing gasket assemblies the end portions are disposed substantially transverse to the outer surfaces.

In a further embodiment of any of the foregoing gasket assemblies the end portions define an end surface for providing sealing contact against a surface different than a surface contacted by the outer surface of the sealing portion.

In a further embodiment of any of the foregoing gasket assemblies, the gasket assembly includes a substantially W-shape cross-section.

In a further embodiment of any of the foregoing gasket assemblies, the bias portion includes an inner W-shaped cross-section.

A gasket assembly for a gas turbine engine according to another aspect of the present invention includes a cavity defined about an axis of the gas turbine engine between a first surface and a second surface movable relative to each other and a gasket disposed within the cavity. The gasket including a seal portion including outer surfaces in sealing contact with each of the first and second surfaces, a bias portion biasing the outer surfaces into sealing contact with each of the first and second surfaces, and end portions disposed at ends of the outer surfaces including a first thickness greater than a second thickness of the bias portion.

In an embodiment of the foregoing gasket assembly, the first and second surfaces are substantially parallel to each other and the cavity includes a third surface transverse to the first and second surfaces.

In a further embodiment of any of the foregoing gasket assemblies, the cavity is annular about the axis and the first and second surfaces are disposed transverse to the axis.

In a further embodiment of any of the foregoing gasket assemblies, the gasket comprises a W-shaped cross-section including an inner W-shaped portion spaced apart from the outer surfaces.

In a further embodiment of any of the foregoing gasket assemblies, the inner W-shaped portion comprises the bias portion.

In a further embodiment of any of the foregoing gasket assemblies, the end portions are disposed at terminal ends of the seal portion.

In a further embodiment of any of the foregoing gasket assemblies, the second thickness of the bias portion defines a biasing force for biasing the seal portions into sealing contact with the first and second surfaces.

A method of forming a gasket assembly according to another exemplary aspect of the present invention includes forming a substantially planar metal strip to include a first thickness at end portions greater than a second thickness at a midpoint between the end portions, and forming the planar metal strip into a substantially W-shaped cross-section including outer sealing surfaces and an inner W-shaped portion defining a biasing portion with the end portions disposed at distal ends of the outer sealing surfaces.

In an embodiment of the foregoing method of forming a seal assembly the method includes the step of forming the end portions to extend substantially transverse to the outer surfaces.

In a further embodiment of any of the foregoing methods of forming a gasket assembly the method includes the step of extending the cross-section of the gasket assembly a length transverse to the W-shaped cross-section.

In a further embodiment of any of the foregoing methods of forming a gasket assembly the method includes spacing the inner W-spaced portion inward of the outer surfaces for separating the sealing portion from the biasing portion.

Although different examples have the specific components shown in the illustrations, embodiments of this invention are not limited to those particular combinations. It is possible to use some of the components or features from one of the examples in combination with features or components of another of the examples.

These and other features disclosed herein can be best understood from the following specification and drawings, the following of which is a brief description.

### BRIEF DESCRIPTION OF THE DRAWINGS

Figure 1 is schematic illustration of an example gas turbine engine.
Figure 2 is a schematic view of a portion of a turbine section of a gas turbine engine.
Figure 3 is a schematic view of an example gasket disposed within an example cavity.
Figure 4 is a schematic view of the example gasket.
Figure 5 is a schematic view of another example gasket.
Figure 6 is a schematic view of an annular example gasket.
Figure 7 is a schematic view of a portion of gasket material.
Figure 8 is a schematic illustration of an example method for forming the example gasket.

### DETAILED DESCRIPTION

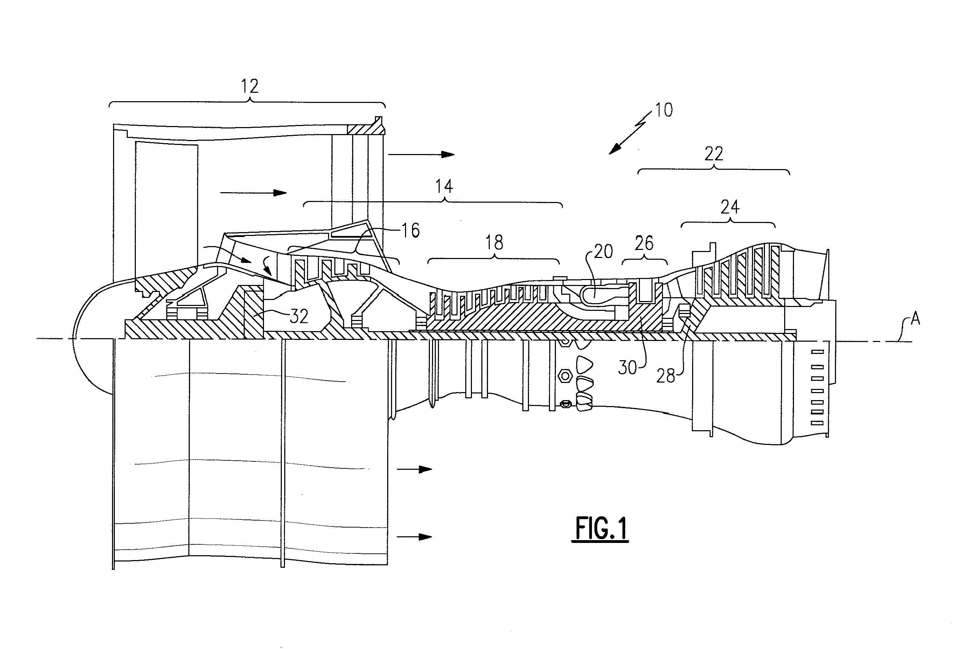

Referring to Figure 1, a gas turbine engine 10 includes a fan section 12, a compressor section 14, a combustor 20 and a turbine section 22. The example compressor section 14 includes a low pressure compressor section 16 and a high pressure compressor section 18. The turbine section 22 includes a high pressure turbine 26 and a low pressure turbine 24. The high pressure compressor section 18, high pressure turbine 26, the low pressure compressor section 16 and low pressure turbine 24 are supported on corresponding high and low spools 30, 28 that rotate about a main axis A.

Air drawn in through the compressor section 14 is compressed and fed into the combustor 20. In the combustor 20, the compressed air is mixed with fuel and ignited to generate a high speed gas stream. This gas stream is exhausted from the combustor 20 to drive the turbine section 24. The fan section 12 is driven through a gearbox 32 by the low spool 28.

The engine 10 in the disclosed embodiment is a high-bypass geared architecture aircraft engine. In one disclosed embodiment, the engine 10 bypass ratio is greater than ten (10:1), the turbofan diameter is significantly larger than that of the low pressure compressor 16, and the low pressure turbine 24 has a pressure ratio that is greater than 5:1. The gear train 32 may be an epicycle gear train such as a planetary gear system or other gear system with a gear reduction ratio of greater than 2.5:1. It should be understood, however, that the above parameters are only exemplary of one embodiment of a geared architecture engine and that the present application is applicable to other gas turbine engines including direct drive turbofans.

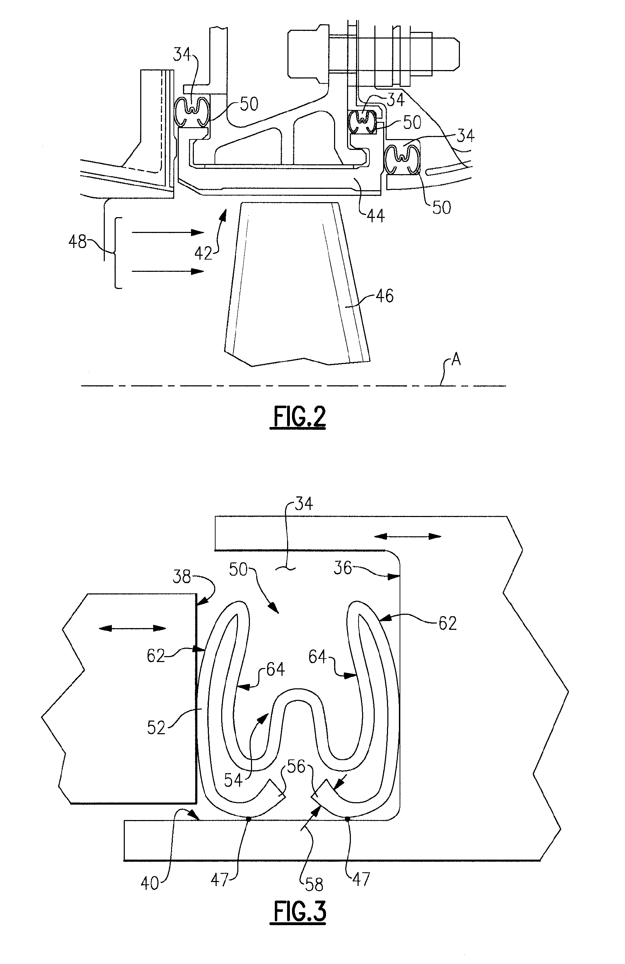

Referring to Figure 2, an enlarged schematic view of a portion of the turbine section 22 is shown along with gaskets 50. It should be understood, that although the turbine section 22 is shown by way of example, gaskets 50 are located throughout the gas turbine engine 10. The example gaskets 50 are shown within a shroud assembly 42 that includes a blade outer air seal (BOAS) 44 proximate to an example turbine blade 46. Working gases, indicated at 48, produced in the combustor 20 expand in the turbine section 22 and produce pressure gradients, temperature gradients and vibrations. The BOAS 44 are supported to provide for relative movement to accommodate expansion caused by changes in pressure, temperature and vibrations encountered during operation of the gas turbine engine 10. The gaskets 50 are disposed within the cavities 34 to control air flow and leakage of working gases around the example BOAS 44.

Referring to Figure 3, one of the example cavities 34 is shown and includes a first surface 36 that is movable relative to a second surface 38. The surfaces 36 and 38 are portions of relative moveable parts of the shroud assembly 42. (Figure 2). In this example, the first and second surfaces 36 and 38 are movable axially relative to each other. The cavity 34 further includes bottom surface 40 that supports the gasket 50. Relative movement of the first and second surfaces 36 and 38 produces a frictional interface between the gasket 50 and the bottom surface 40 at the points indicated at 47. Relative movement of the first and second surfaces 36 and 38 as well as the bottom surface 40 is accommodated by the gasket 50.

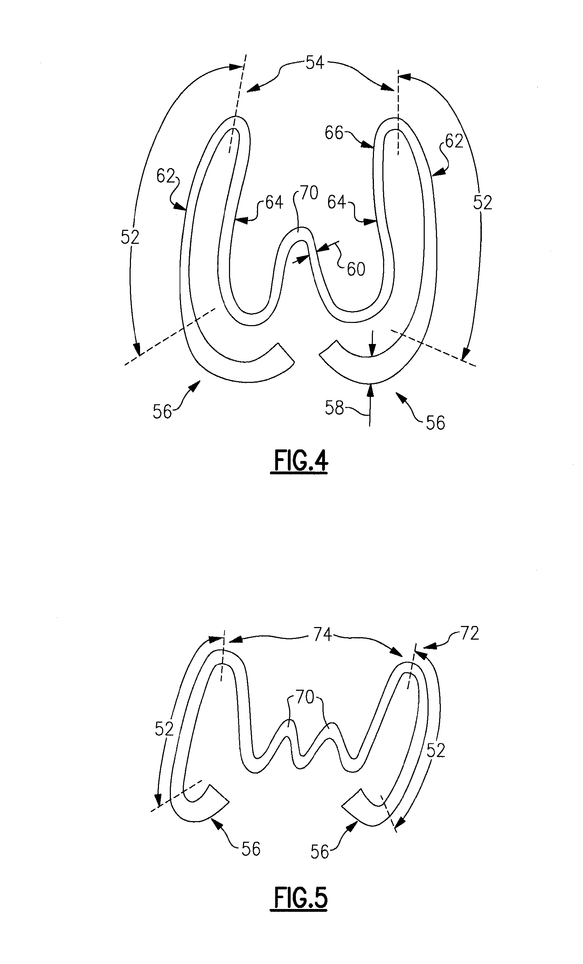

Referring to Figure 4 with continued reference to Figure 3, the example gasket 50 includes sealing portions 52 that include outer surfaces 62 that seal against corresponding first and second walls 36, 38. Between the outer surfaces 62 is a biasing portion 54. The biasing portion 54 provides the desired biasing force that pushes and maintains contact pressure of the outer surfaces 62 against the corresponding first and second surfaces 36, 38. End portions 56 extend from the sealing portions 52 and contact the bottom surface 40. The end portions 56 include a first thickness 58 that is greater than a thickness of the other portions of the gasket 50.

Biasing force is a function of a second thickness 60 within the biasing portion 54. The thicker the material in the biasing portion 54, the greater the biasing force exerted on the outer surfaces 62 of the corresponding seal portions 52. The example gasket 50 includes a first thickness of the end portions 56 that is greater than the second thickness 60 in the biasing portion 54. The biasing force is defined to provide a desired contact pressure of the outer surfaces 62 against the corresponding first and second surfaces 36, 38 while not exerting a force that could restrict desired operation.

The sealing portions 52, biasing portion 54 and end portions 56 are part of a single continuous structure that defines a generally W-shaped cross-sectional shape of the gasket 50. The biasing portion 54 includes a substantially inner W-shaped portion 66 that is spaced apart from outer surfaces 62. The inner W-shaped portion 66 includes inner legs 64 that extend from a curved portion 70. The inner legs 64 are spaced apart inward of the sealing portions 52 that include the outer surface 62. The central curved portion 70 provides for an outward bias against the sealing portions 52.

The end portions 56 include the first material thickness 58 that is greater than other portions of the gasket 50 including the second thickness 60 of the biasing portion 54. The increased thickness 58 disposed within the end portions 56 prevent premature wear through of the end portions 56 at the contact points 47.

The seal portion 52 is separated and spaced apart from the biasing portion 54 such that the sealing and biasing functions are separated. The spacing apart or separation of the biasing function from the sealing function extends the duration for which the gasket is operable and prevents premature wear through during operation of the gasket 50.

The first thickness 58 provided by the end portions 56 is not compatible with the desired biasing force provided by the biasing portion 54. Accordingly, the second thickness 60 within the biasing portion 54 is less than the first thickness 58. The thickness 60 is determined to be that thickness which provides the desired biasing force to seal the sealing portions 52 without adversely affecting operation or constraining movement of the relative moving parts. Accordingly, the end portions 56 include the thickness 58 that is greater than all other portions of the gasket 50.

Referring to Figure 5, with continued reference to Figure 4, another example gasket 72 includes a biasing portion 74 with two curved portions 70. Each curved portion provides for a greater width of the gasket 72 such that it may expand within a cavity of greater width than that of the gasket pictured in Figure 3. As appreciated, the thickness within the biasing portion 74 is not increased, it is merely provided with an added curved portion 70 to accommodate the greater desired width.

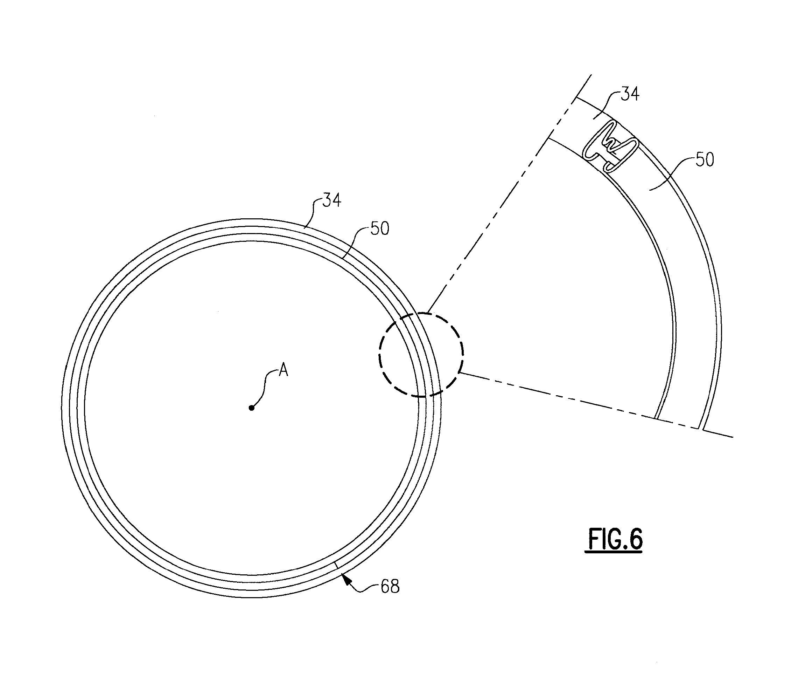

Referring to Figure 6, the example gasket 50 is annular and extends annularly about the axis A of the gas turbine engine. Gasket 50 may include a split 68 that provides for assembly in a desired manner. Although the example gasket 50 is illustrated as an annular gasket, it may also be utilized in linear sealing applications.

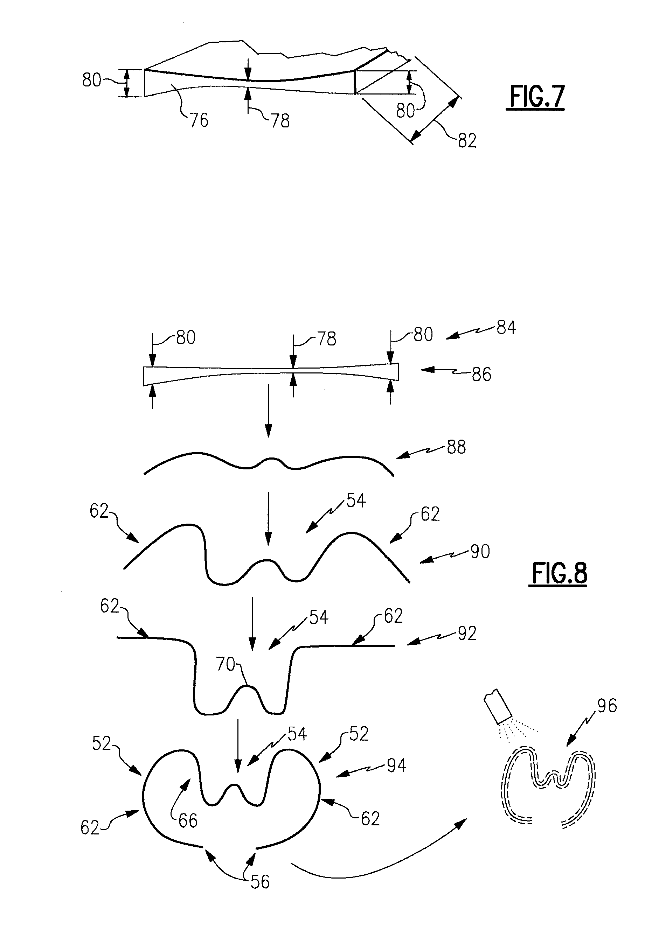

Referring to Figure 7, the example gasket 50 is fabricated from a sheet of metal material 76 that begins at a uniform thickness and desired length 82. The metal material 76 is formed to provide a greater thickness 80 at distal sides. The specific metal material may include known alloys that are compatible with desired manufacturing processes and the environment within the gas turbine engine. The greater thickness at the end portions 80 provides the completed gasket 50 with the desired increased thickness at the end portions 56. In this example, the center portion is provided with a thickness 78 that defines a desired biasing force exerted by the completed gasket. As appreciated, the biasing force 78 is determined to provide sufficient sealing capacity while not significantly changing and/or preventing relative movement between components defining the cavity 34.

Referring to Figure 8, a method of forming the example gasket 50 is schematically shown at 84 and includes the initial step 86 of forming a sheet of material having a desired width to have an increased thickness 80 at end portions that is greater than a thickness 78 at a center portion. The method further includes forming the thickness 78 to provide a desired biasing force of the sealing portions 52 in the completed gasket 50.

Once the material has been formed to include the desired first and second thicknesses, 78, 80, the material is formed to provide the desired generally W-shaped cross-section. In a first forming step indicated at 88, a beginning shape of the gasket 50 is formed. In this example, the formation steps are accomplished through a series of pressing dies that transform the material into the desired cross-sectional shape. However, other processes that are known in the art can be utilized to provide the desired shape of the gasket 50.

A first intermediate bend illustrated at 90 includes a further definition of the biasing portion 54 along with the outer sealing surfaces 62. A third intermediate forming operation indicated at 92, further bends and defines the biasing portion 54 and extends the sealing surfaces 62 of the sealing portion outwardly.

Forming step indicated at 94 provides a substantially complete cross-sectional shape of the gasket 50. The final bending operation 94 forms the biasing portion 54 and wraps the sealing portions 52 around and spaced part from the biasing portion 54. The example completed gasket 50 includes the inner W-shaped portion 66 that is spaced inwardly apart from the outer sealing surfaces 62. The end portions are wrapped around and substantially underneath the biasing portion 54 to contact surfaces transverse to the surfaces contacted by the outer surfaces 62. It should be understood, that although a certain number and sequence of forming steps are described by way of example, other steps and sequences of bending and forming operations could also be utilized to generate the substantially W-shaped gasket 50.

The completed gasket 50 may be coated with an anti-wear coating as is schematically shown at 96. The anti-wear coating is shown applied to the entire gasket 50, but may also be applied to only the contact surfaces. The coating may be utilized to further improve the wear properties of the gasket 50. Accordingly, the example gasket 50 provides increased durability while maintaining the desired sealing capacity without performance of the gasket part 50.

Although an example embodiment has been disclosed, a worker of ordinary skill in this art would recognize that certain modifications would come within the scope of this disclosure. For that reason, the following claims should be studied to determine the scope and content of this invention.

## Claims

1. A gasket (50; 72) for a gas turbine engine, the gasket (50; 72) comprising:
a seal portion (52) defining outer surfaces (62) for providing sealing contact;
a bias portion (54; 74) defining inner structures that are spaced apart from the seal portion (52) for biasing the outer surfaces (62) into sealing contact; and
end portions (56) disposed at ends of the seal portion (52) that including a material thickness (58) greater than a thickness of the bias portion (54; 74).

2. The gasket as recited in claim 1, wherein the gasket comprises a single continuous structure and the end portions (56) define distal ends of the continuous structure.

3. The gasket as recited in claim 1 or 2, wherein the bias portion (54; 74) comprises inner legs (64) spaced apart inward of the outer surfaces (62).

4. The gasket as recited in claim 3, wherein the thickness of the end portions (56) is greater than a thickness of the inner legs (64).

5. The gasket as recited in any preceding claim, wherein the end portions (56) are disposed substantially transverse to the outer surfaces (62).

6. The gasket as recited in any preceding claim, wherein the end portions (56) define an end surface for providing sealing contact against a surface (40) different than a surface (36, 38) contacted by the outer surface (62) of the seal portion (52).

7. The gasket assembly as recited in any preceding claim, wherein the gasket comprises a substantially W-shape cross-section.

8. The gasket assembly as recited in any preceding claim, wherein the substantially W-shape cross-section (54, 74) comprises an inner W-shaped cross-section (66).

9. The gasket as recited in claim 8, wherein the bias portion (54; 74) comprises the inner W-shaped portion (66).

10. The gasket as recited in any preceding claim, wherein the end portions (56) are disposed at terminal ends of the seal portion (52).

11. A gasket assembly for a gas turbine engine, the gasket assembly comprising:
a cavity (34) defined between a first surface (36) and a second surface (38) movable relative to each other; and
a gasket (50; 72) as recited in any preceding claim disposed within the cavity (34), the seal portion outer surfaces (62) in sealing contact with each of the first and second surfaces (36, 38), the bias portion (54; 74) biasing the outer surfaces (62) into sealing contact with each of the first and second surfaces (36, 38).

12. The gasket assembly as recited in claim 11, wherein the first and second surfaces (36, 38) are substantially parallel to each other and the cavity (34) includes a third surface (40) transverse to the first and second surfaces (36, 38) and/or wherein the cavity (34) is annular about the axis and the first and second surfaces (36, 38) are disposed transverse to the axis.

13. A method of forming a gasket assembly comprising:
forming a substantially planar metal strip (76) to include a first thickness (80) at end portions (56) greater than a second thickness (78) at a midpoint between the end portions (56); and
forming the planar metal strip into a substantially W-shaped cross-section including outer sealing surfaces (62) and an inner W-shaped portion (66) defining a biasing portion (54; 74) with the end portions (56) disposed at distal ends of the outer sealing surfaces (62).

14. The method of forming a gasket assembly as recited in claim 13, including the step of forming the end portions (56) to extend substantially transverse to the outer surfaces (62).

15. The method of forming the gasket assembly as recited in claim 13 or 14, including extending the cross-section of the gasket assembly a length transverse to the W-shaped cross-section (66) and/or including spacing the inner W-spaced portion (66) inward of the outer surfaces (62) for separating a sealing portion (52) from the biasing portion (54; 74).
